# EUROPEAN PATENT SPECIFICATION

(11) **EP 3 812 226 B1**
(45) Date of publication and mention of the grant of the patent: **12.04.2023**
(21) Application number: 19930769.5
(22) Date of filing: 03.07.2019
(51) Int. Cl.: B60T 13/24, F16D 65/14, B61H 13/02, B60T 13/26, B60T 13/36, B60T 17/08

(54) **VEHICLE PARKING BRAKE APPARATUS**
FESTSTELLBREMSVORRICHTUNG FÜR FAHRZEUGE
APPAREIL FREIN DE STATIONNEMENT DE VÉHICULE

(30) Priority: 30.05.2019 CN 201910462188
(43) Date of publication of application: 28.04.2021
(73) Proprietor: Meishan CRRC Brake Science & Technology Co., Ltd., Meishan, Sichuan 620010 (CN)
(72) Inventor: LIU, Yi, Meishan, Sichuan 620010 (CN); QUAN, Qiong, Meishan, Sichuan 620010 (CN); LI, Guo, Meishan, Sichuan 620010 (CN); AN, Hong, Meishan, Sichuan 620010 (CN); XIAO, Weiyuan, Meishan, Sichuan 620010 (CN); YANG, Jianping, Meishan, Sichuan 620010 (CN); SHEN, Yanfei, Meishan, Sichuan 620010 (CN); SHEN, Jianhong, Meishan, Sichuan 620010 (CN); WANG, Kaien, Meishan, Sichuan 620010 (CN); MAO, Fuying, Meishan, Sichuan 620010 (CN); XIE, Lei, Meishan, Sichuan 620010 (CN); WEI, Xueli, Meishan, Sichuan 620010 (CN); LIU, Ping, Meishan, Sichuan 620010 (CN); OU, Dongfang, Meishan, Sichuan 620010 (CN); SHI, Yunxiao, Meishan, Sichuan 620010 (CN); LV, Liang, Meishan, Sichuan 620010 (CN); WU, Jiheng, Meishan, Sichuan 620010 (CN)
(74) Representative: Heinonen & Co
(86) International application number: PCT/CN2019/094610
(87) International publication number: WO 2020/237775

(56) References cited:
- EP-A2- 0 875 436
- WO-A1-02/073058
- CN-A- 102 996 690
- CN-A- 102 996 690
- CN-A- 108 644 263
- CN-U- 207 621 220
- CN-U- 208 715 179
- CN-U- 208 715 179

## Description

### Technical Field

The present disclosure relates to the technical field of vehicle brake cylinders, and particularly to a vehicle brake parking device (i.e., a vehicle parking brake apparatus).

### Background Art

Brake parking is a very important constituent part of a vehicle braking system. It is mainly used for the parking requirements of rail traffic vehicles under no wind condition, such as garage parking at night, line parking of faulty vehicles or the like.

Current brake parking systems are usually configured with a set of brake cylinder and a set of hand brake, wherein the brake cylinder completes service braking (common braking, emergency braking), while the hand brake is usually used for parking under following conditions: if a vehicle needs to stay on a rampway for a long time during operation, the hand brake needs to be tightened, so as to prevent the occurrence of undesired release and loss of the braking action due to leakage of the brake cylinder; the hand brake needs to be tightened for preventing vehicle slipping accidents in a case of rampway parking; and the hand brake needs to be tightened for preventing the vehicle from being blown away by strong wind. Although the structure thereof is simple, the magnitude of the braking force thereof depends on the strength of the operator and thus is highly dependent on the operator.

CN 208 715 179 U discloses a brake system for a railway wagon vehicle. The brake system comprises at least a cylinder block, a cylinder base, a piston assembly, a release spring, and a locking mechanism. The system uses the locking mechanism to fix position of the piston assembly, thereby maintaining the braking force. By using the brake system, labor intensity can be greatly reduced. The document does not mention provisions for filtering (pressurized) air in the braking system.

### Summary

An object of the present invention comprises providing a vehicle brake parking device, which is able to realize the automation of brake parking of a vehicle by utilizing the pressure change of the train pipe, and according to what is defined in the independent claim 1.

An embodiment of the present invention is implemented as follows.

The embodiment of the present invention provides a vehicle brake parking device, comprising: a cylinder block, a cylinder base, a first piston assembly, a first release spring, a parking mechanism, and a cylinder head, wherein the cylinder block is arranged on the cylinder base, the cylinder head covers the side of the cylinder block away from the cylinder base, the cylinder block and the cylinder head form a first accommodating cavity, and a first mounting hole is formed at the center of the cylinder head; the parking mechanism includes a mounting base, a retaining member, and a booster assembly, wherein the mounting base is arranged on the end face of the cylinder head away from the cylinder block, a second mounting hole is formed at the position of the mounting base corresponding to the first mounting hole, and the retaining member is arranged in the second mounting hole; the first piston assembly includes a first piston slidably connected in the first accommodating cavity, and a first piston rod which is in fixed connection with the first piston, wherein the first piston rod extends to the outside of the parking mechanism after successively penetrating the first mounting hole and the second mounting hole; the first release spring is sleeved on the outer circumference of the first piston rod, and one end thereof is in connection with the first piston, while the other end is in connection with the cylinder head; the outer circumference of the first piston rod is provided with an annular groove, which is available for clamping the retaining member; and the booster assembly is in connection with the mounting base, and is available for pushing the retaining member out of the annular groove under the action of the gas pressure of a train pipe, such that the parking mechanism is in a released state. The vehicle brake parking device can realize the automation of brake parking of a vehicle by utilizing the pressure change of the train pipe.

In an optional embodiment of the present invention, the outer circumference of the first piston is provided with an annular slot, which is provided therein with a sealing ring that is locked in the annular slot through a leather cup locking ring.

In an optional embodiment of the present invention, the first piston assembly further includes a locking ring stopper extending outward from the outer circumference of the first piston, wherein the locking ring stopper is configured to stop the leather cup locking ring from being separated from the annular slot

In an embodiment of the present invention, the booster assembly is arranged to be perpendicular to the mounting base; the booster assembly includes a booster body, and an air inlet and a third mounting hole that are respectively provided on two opposite ends of the booster body; the end of the booster body provided with the third mounting hole is further provided with a limiting tube, wherein the limiting tube is mounted at the orifice of the third mounting hole, the outer diameter of the tube body gradually increases outward in the shape of step, a second accommodating cavity is formed by the third mounting hole and the limiting tube, and the air inlet is in communication with the second accommodating cavity through an air passage; the second accommodating cavity is provided therein with a second piston, one end of the second piston faces the direction of the retaining member, and the booster body is provided with a first via hole in correspondence with the second piston; the position of the mounting base corresponding to the first via hole is provided with a second via hole, and the second accommodating cavity, the first via hole, and the second via hole are successively in communication with the second mounting hole; one end of the second piston successively penetrates the first via hole and the second via hole, and abuts against the retaining member; and the gas in the train pipe successively enters the air inlet, the air passage, and the second accommodating cavity, hereby pushing the second piston to retract and pushing the second piston away from the retaining member.

In an optional embodiment of the present invention, the vehicle brake parking device further comprises a manual release mechanism arranged in the second piston, wherein the end portion of the manual release mechanism close to the retaining member is in connection with the second piston, while the end portion away from the retaining member penetrates the second piston and extends out of the limiting tube, the manual release mechanism is pulled in a direction away from the retaining member, and the manual release mechanism drives the second piston to retract, such that the retaining member is separated from the annular groove.

In an optional embodiment of the present invention, the end portion of the manual release mechanism close to the retaining member extends from a first through hole of the second piston to the outside of the second piston, the manual release mechanism is pulled in a direction away from the retaining member, and the manual release mechanism moves away from the retaining member, such that the retaining member is separated from the annular groove and the released state is maintained; and gas is filled through the air inlet, and the second piston pushes the manual release mechanism to retract, hereby making the manual release mechanism away from the retaining member.

In an embodiment of the present invention, the air passage is further provided therein with a filter.

The embodiments of the present invention comprise following beneficial effects.

In the vehicle brake parking device provided in the embodiments of the present disclosure, by providing an annular groove on the first piston rod and providing a retaining member on the mounting base of the parking mechanism, the retaining member can be selectively clamped in the annular groove or get rid of the constraint of the annular groove under the assist of the booster assembly according to the pressure change of the train pipe, and the opening and closing of the brake parking can be controlled accordingly. When the pressure of the train pipe is reduced to a certain pressure value after that the vehicle is braked, the booster assembly moves towards the direction of the retaining member, and the retaining member is pushed by the booster assembly to fasten so as to be clamped in the annular groove, in this way, the first piston rod can be fixed, which means that the first piston rod cannot retract, and even if air in the brake cylinder completely leaks out, the first piston rod can still be kept in the braking position under the action of the retaining member, hereby realizing the parking brake, with the magnitude of the parking braking force depending on the acting force of the occurrence of the braking action. When the release is necessary, the train pipe is filled with pressurized air, so as to push the booster assembly to move, at this moment, the booster assembly moves in a direction away from the retaining member, such that the retaining member is unlocked, the annular groove on the first piston rod accordingly gets rid of the constraint of the retaining member, and the first piston rod returns to the initial position under the action of the first release spring, hereby releasing the brake parking action. The vehicle brake parking device can realize the automation of vehicle parking after a braking action occurs, and relieve the dependence of the vehicle brake parking on the operator.

In an optional embodiment of the present invention, the end of the first piston rod away from the first piston is in connection with a push rod, which pushes a basic braking device to produce a braking force.

In an optional embodiment of the present invention, when the pressure of the train pipe is reduced to a certain pressure value after that the vehicle is braked, the booster assembly moves towards the direction of the retaining member, hereby pushing the retaining member to fasten so as to be clamped in the annular groove; and when it is necessary to release the brake, the train pipe is filled with pressurized air, so as to push the booster assembly to move, at this moment, the booster assembly moves in a direction away from the retaining member, such that the retaining member is unlocked, the annular groove on the first piston rod accordingly gets rid of the constraint of the retaining member, and the first piston rod returns to the initial position under the action of the first release spring, hereby relieving the parking brake action.

In an optional embodiment of the present invention, the retaining member is sleeved on the first piston rod, and the outer circumference thereof is embedded in the second mounting hole.

In an optional embodiment of the present invention, the retaining member is an open-ended ring having a clamping portion and a limiting portion, wherein the clamping portion and the limiting portion are arranged opposite to each other, the clamping arc of the clamping portion is able to be clamped in the annular groove, and the limiting portion is clamped in the mounting base in a position-limiting manner.

In an optional embodiment of the present invention, the mounting base is further provided with a fourth mounting hole, the second mounting hole is in communication with the second via hole through the fourth mounting hole, and the fourth mounting hole is further provided therein with a lockup member cooperating with the retaining member, wherein the second piston rod pushes the lockup member, such that the retaining member is fastened, or moves away from the lockup member, such that the retaining member is released.

In an optional embodiment of the present invention, the lockup member is formed in a U-shape.

In an optional embodiment of the present invention, a tapered wedge is further mounted in the second via hole, the side of the tapered wedge away from the lockup member is in threaded connection with the second piston rod, the inclined plane of the tapered wedge matches the inclined plane of the lockup member, and the tapered wedge is pushed by the second piston rod and the lockup member is pushed accordingly by the tapered wedge, to move upwards and contract in a radial direction, such that the retaining member is clamped in the annular groove in a fastened manner.

In an optional embodiment of the present invention, the manual release mechanism is arranged in a third accommodating cavity formed by the limiting tube and the second piston, the end of the second piston close to the retaining member is provided with an open pore, and one end of the manual release mechanism penetrates the open pore and is in connection with the second piston, while the other end extends to the outside of the limiting tube.

### Brief Description of the Drawings

In order to more clearly describe the technical solutions of the embodiments of the present invention, the drawings to be used in the embodiments will be simply presented below; and it shall be understood that the following drawings merely show certain embodiments of the present invention, and thus should not be deemed as limiting the scope thereof, and for a person ordinarily skilled in the art, further relevant drawings could be obtained according to these drawings without inventive efforts.
Fig. 1 is a structural schematic view showing a vehicle brake parking device provided in an embodiment of the present invention;
Fig. 2 is a sectional view of Fig. 1;
Fig. 3 is a structural schematic view of the parking mechanism in Fig. 1;
Fig. 4 is a schematic view showing the connection structure between the first piston and the first piston rod in Fig. 1;
Fig. 5 is a partial enlarged view of the part A in Fig. 4;
Fig. 6 is a partial enlarged view of the part B in Fig. 4;
Fig. 7 is a first structural schematic view of a retaining member;
Fig. 8 is a second structural schematic view of the retaining member;
Fig. 9 is a first schematic view showing the parking mechanism in an unlocked state;
Fig. 10 is a first schematic view showing the parking mechanism in a locked state;
Fig. 11 is a structural schematic view of a manual release mechanism;
Fig. 12 is a schematic view showing a tightened state of the manual release mechanism;
Fig. 13 is a second schematic view showing the parking mechanism in an unlocked state;
Fig. 14 is a partial enlarged view of the part C in Fig. 13;
Fig. 15 is a second schematic view showing the parking mechanism in a locked state; and
Fig. 16 is a partial enlarged view of the part D in Fig. 15.

Reference Signs: 100-vehicle brake parking device; 10-cylinder block; 11-first accommodating cavity; 20-cylinder base; 31-first release spring; 32-first piston; 321-annular slot; 322-sealing ring; 323-leather cup locking ring; 324-locking ring stopper; 33-first piston rod; 331-annular groove; 40-parking mechanism; 41-mounting base; 411-second mounting hole; 412-second via hole; 413-fourth mounting hole; 414-lockup member; 415-tapered wedge; 416-second via hole; 42-retaining member; 421-clamping portion; 422-limiting portion; 423-clamping arc; 43-booster assembly; 431-booster body; 4311-air inlet; 4312-third mounting hole; 4313-first via hole; 432-limiting tube; 433-second accommodating cavity; 434-air passage; 435-second piston; 4351-second piston rod; 4352-second release spring; 436-third accommodating cavity; 44-filter; 50-cylinder head; 51-first mounting hole; 60-manual release mechanism; 61-release mechanism body; 62-taper shank; 63-spherical washer; 64-release screw; 65-fourth accommodating cavity; 66-third release spring; and 67-limiting bayonet.

### Detailed Description of the Embodiments

In order to make the objects, the technical solutions, and the advantages of the embodiments of the present invention clearer, the technical solutions of the embodiments of the present invention will be clearly and comprehensively described below with reference to the accompanying drawings in the embodiments of the present invention.

Clearly, the described embodiments are merely some of the embodiments of the present invention, but not all the embodiments. Generally, the assemblies of the embodiments of the present invention that are described and shown here in the figures may be arranged and designed according to various configurations.

Thus, the following detailed description of the embodiments of the present invention that are provided in the figures merely represents selected embodiments of the present invention, rather than being intended to limit the scope of the present invention for which protection is sought. Any other embodiments, obtained by a person ordinarily skilled in the art without inventive efforts based on the embodiments in the present invention, shall fall within the scope of protection of the present invention, as defined by the claims.

It shall be noted that similar reference signs and letters represent similar items in the following figures, thus, once a certain item is defined in one figure, no further definition and explanation of this item is necessary in the subsequent figures.

In the description of the present invention, it shall be clarified that orientation or position relationships indicated by terms such as "central", "upper", "lower", "left", "right", "vertical", "horizontal", "inner", and "outer" are orientation or position relationships shown based on the figures, or orientation or position relationships in which the product of this invention is conventionally placed during use, merely for the purpose of facilitating the description of the present invention and for simplifying the description, rather than indicating or implying that a specified device or element must have a specific orientation, and be constructed and operated in a certain orientation, and therefore cannot be construed as limiting the present invention. In addition, terms such as "first", "second", and "third" are used merely for purpose of differentiated description, and cannot be construed as indicating or implying to have importance in relativity.

In addition, terms such as "horizontal" and "vertical" do not mean that the components are required to be absolutely horizontal or pendulous, on the contrary, they may be slightly inclined. For example, the term "horizontal" only means that the direction thereof is more horizontal relative to "vertical", rather than indicating that this structure must be completely horizontal, on the contrary, this structure may be slightly inclined.

In the description of the present invention, it shall be further clarified that, unless otherwise expressly specified and defined, terms such as "provide", "mount", "link", and "connect" shall be construed in a broad sense. For example, it may be fixed connection, or detachable connection, or integrated connection; it may be mechanical connection, or electrical connection; and it may be direct connection, or indirect connection via an intermediate, or inner communication between two elements. For a person ordinarily skilled in the art, the specific meanings of the above-mentioned terms in the present invention could be construed in accordance with specific circumstances.

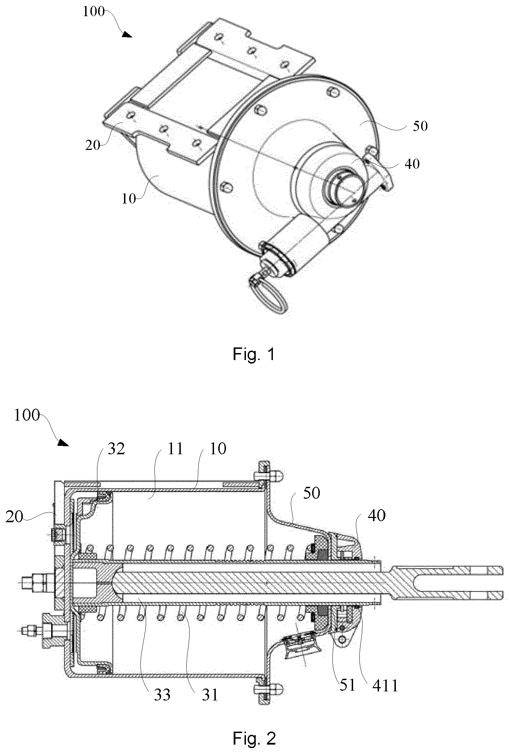

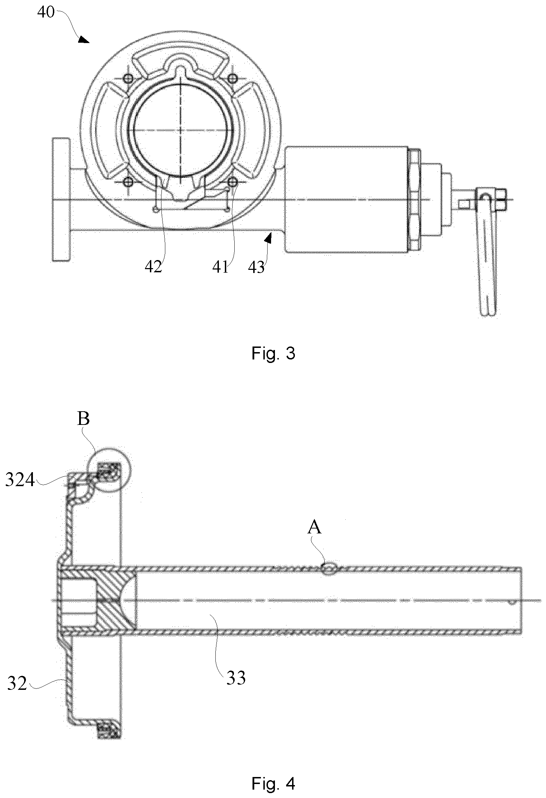

Referring to Figs. 1 to 5, the present embodiment provides a vehicle brake parking device 100, comprising: a cylinder block 10, a cylinder base 20, a first piston assembly, a first release spring 31, a parking mechanism 40, and a cylinder head 50, wherein the cylinder block 10 is arranged on the cylinder base 20, the cylinder head 50 covers the side of the cylinder block 10 away from the cylinder base 20, the cylinder block 10 and the cylinder head 50 form a first accommodating cavity 11, and a first mounting hole is formed at the center of the cylinder head 50; the parking mechanism 40 includes a mounting base 41, a retaining member 42, and a booster assembly 43, wherein the mounting base 41 is arranged on the end face of the cylinder head 50 away from the cylinder block 10, the part of the mounting base 41 corresponding to the first mounting hole is provided with a second mounting hole 411, and the retaining member 42 is arranged in the second mounting hole 411; the first piston assembly includes a first piston 32 slidably connected in the first accommodating cavity 11, and a first piston rod 33 which is in fixed connection with the first piston 32, wherein the first piston rod 33 extends to the outside of the parking mechanism 40 after successively penetrating the first mounting hole 51 and the second mounting hole 411; the first release spring 31 is sleeved on the outer circumference of the first piston rod 33, and one end thereof is in connection with the first piston 32, while the other end is in connection with the cylinder head 50; the outer circumference of the first piston rod 33 is provided with an annular groove 331, which is available for clamping the retaining member 42; and the booster assembly 43 is in connection with the mounting base 41, and is available for pushing the retaining member 42 out of the annular groove 331 under the action of the gas pressure of a train pipe, such that the parking mechanism is in a released state.

Following contents need to be clarified: Firstly, the cylinder block 10, the cylinder base 20, the piston assembly, the first release spring 31, and the cylinder head 50 form a brake cylinder. The end of the first piston rod 33 away from the first piston 32 is further in connection with a push rod, which pushes a basic braking device to produce a braking force. In the present embodiment, the first piston 32 and the first piston rod 33 are welded together.

Secondly, the cylinder head 50 covers the side of the cylinder block 10 away from the cylinder base 20, such that the cylinder block 10 and the cylinder head 50 form a first accommodating cavity 11, in this way, the first piston assembly and the first release spring 31 can be placed in the first accommodating cavity 11; and the central part of the cylinder head 50 is further provided with a first mounting hole, so as to enable the first piston rod 33 to extend out of the cylinder head 50 through the first mounting hole, hereby pushing the basic braking device to produce a braking force. It should be understood that the first piston assembly and the first release spring 31 are enabled to selectively move towards the left or right in the first accommodating cavity 11 under the action of the pressure.

Thirdly, the parking mechanism 40 includes a mounting base 41, a retaining member 42, and a booster assembly 43, wherein the mounting base 41 of the parking mechanism 40 is in connection with the cylinder head 50, which may be realized in various ways, e.g. through welding or through a connecting piece or the like, and in the present embodiment, the mounting base 41 and the cylinder head 50 are in connection through bolt. Moreover, an end face of the mounting base 41 is provided with an O-shaped sealing ring for preventing rainwater or dust in the external environment from entering the interior of the device. Besides, in order to enable the first piston assembly to partially extend to the outside of the whole device, the position of the mounting base 41 corresponding to the first mounting hole is provided with a second mounting hole 411.

Fourthly, the retaining member 42 is sleeved on the first piston rod 33, and the outer circumference thereof is embedded in the second mounting hole 411, it should be understood that the outer circumference of the retaining member 42 is embedded in the second mounting hole 411 for the purpose of preventing that the normal working of the retaining member 42 is affected due to free movement of the retaining member 42 in the second mounting hole 411. The method for clamping the retaining member 42 in the annular groove 331 can be implemented according to the structure of the retaining member 42, and a suitable selection regarding this structure could be made by a person skilled in the art voluntarily.

Fifthly, the first piston assembly includes a first piston 32 and a first piston rod 33, wherein the first piston 32 can move towards the left or right along the internal wall of the cylinder block 10 under the action of force, and the external surface of the first piston rod 33 is further provided with an annular groove 331, which can selectively be clamped with the retaining member 42 when the first piston rod 33 moves towards the left or right. It should be noted that, in order to make the annular groove 331 on the first piston rod 33 be smoothly clamped with the retaining member 42, the stroke from vacant parking space to vacant parking space of the brake cylinder should be considered to determine the setting position of the annular groove 331 on the first piston rod 33, which could be obtained by a person skilled in the art based on calculation, and no repetitive description will be made here.

Sixthly, the fastening of the retaining member 42 is realized by pushing the booster assembly 43 of the parking mechanism 40 through an air pressure to move when the air pressure of the train pipe is reduced to a certain pressure value, wherein the booster assembly 43 pushes the retaining member 42, such that the retaining member 42 is clamped in the annular groove 331 for fastening; and when the pressure in the train pipe rises, it moves away from the retaining member 42, such that the retaining member 42 gets rid of the constraint of the annular groove 331 for unlocking.

In summary, in the vehicle brake parking device 100 provided in the embodiments of the present invention, by providing an annular groove 331 on the first piston rod 33 and providing a retaining member 42 on the mounting base 41 of the parking mechanism 40, the retaining member 42 can be selectively clamped in the annular groove 331 or get rid of the constraint of the annular groove 331 under the assist of the booster assembly 43 according to the pressure change of the train pipe, and the opening and closing of the brake parking can be controlled accordingly. When the pressure of the train pipe is reduced to a certain pressure value after that the vehicle is braked, the booster assembly 43 now moves towards the direction of the retaining member 42 and pushes the retaining member 42 to fasten so as to be clamped in the annular groove 331, in this way, the first piston rod 33 can be fixed, which means that the first piston rod 33 cannot retract, and even if air in the brake cylinder completely leaks out, the first piston rod 33 can still be kept in the braking position under the action of the retaining member 42, hereby realizing the parking brake, with the magnitude of the parking braking force depending on the acting force of the occurrence of the braking action. When it is necessary to release the brake, the train pipe is filled with pressurized air, so as to push the booster assembly 43 to move, at this moment, the booster assembly 43 moves in a direction away from the retaining member 42, such that the retaining member 42 is unlocked, the annular groove 331 on the first piston rod 33 accordingly gets rid of the constraint of the retaining member 42, and the first piston rod 33 returns to the initial position under the action of the first release spring 31, hereby relieving the parking brake action. The vehicle brake parking device 100 can realize the automation of vehicle parking by utilizing the pressure change of the train pipe.

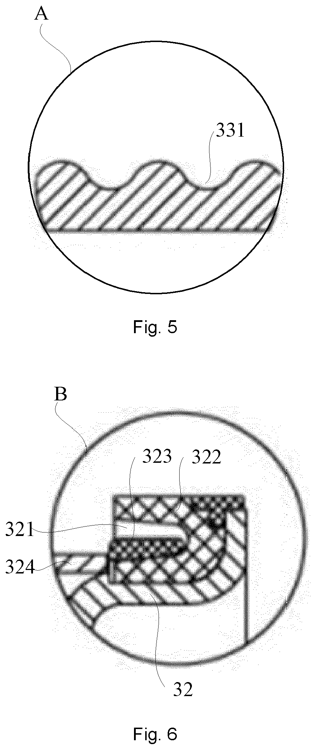

Referring further to Fig. 6, in the present embodiment, in order to create a sealed environment, the outer circumference of the first piston 32 is provided with an annular slot 321, which is provided therein with a sealing ring 322 that is locked in the annular slot 321 through a leather cup locking ring 323, so as to prevent the sealing ring 322 from being separated from the annular slot 321.

It shall be clarified that, in order to further enhance the stability of the sealing ring 322, in the present embodiment, the first piston assembly further includes a locking ring stopper 324 extending from the outer circumference of the first piston 32 outwards, wherein the locking ring stopper 324 is configured to stop the leather cup locking ring 323 from being separated from the annular slot 321. Besides, a guiding belt is further mounted on the outer edge of the first piston 32 away from the first piston rod 33.

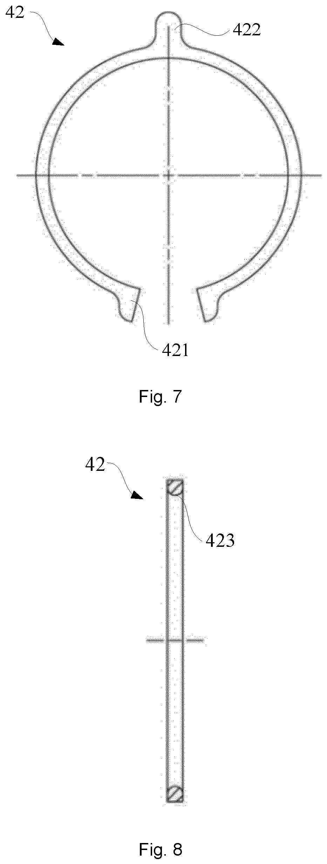

Referring further to Figs. 7 and 8, the retaining member 42 may be an open-ended ring having a clamping portion 421 and a limiting portion 422, wherein the clamping portion 421 and the limiting portion 422 are arranged opposite to each other, the clamping arc 423 of the clamping portion 421 is able to be clamped in the annular groove 331, and the limiting portion 422 is clamped in the mounting base 41 in a position-limiting manner. The limiting portion 422 is configured to prevent the retaining member 42 from rotating in the mounting base 41.

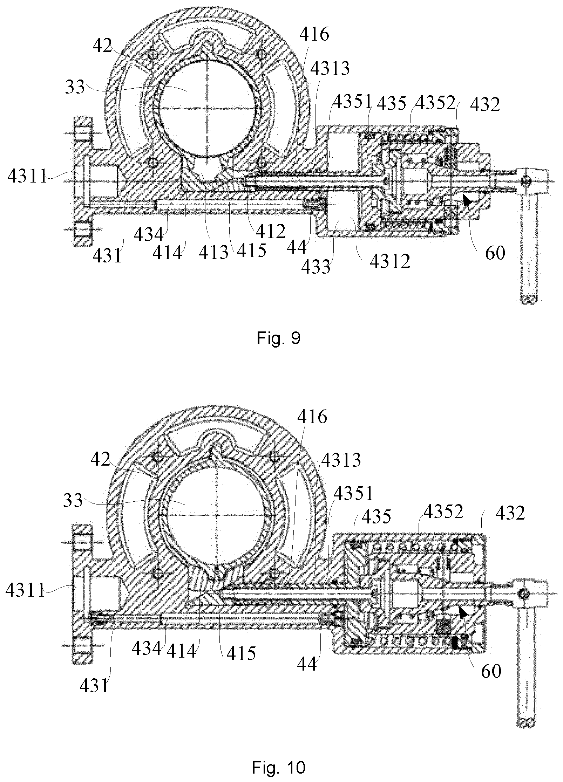

Referring further to Figs. 9 and 10, in the present embodiment, the booster assembly 43 is arranged to be perpendicular to the mounting base 41; the booster assembly 43 includes a booster body 431, and an air inlet 4311 and a third mounting hole 4312 that are respectively provided on two opposite ends of the booster body 431; and the end of the booster body 431 provided with the third mounting hole 4312 is further provided with a limiting tube 432, wherein the limiting tube 432 is sleeved at the orifice of the third mounting hole 4312, the outer diameter of the tube body gradually increases outwards in the shape of step, a second accommodating cavity 433 is formed by the third mounting hole 4312 and the limiting tube 432, and the air inlet 4311 is in communication with the second accommodating cavity 433 through an air passage 434.

The second accommodating cavity 433 is provided therein with a second piston 435, one end of the second piston 435 is arranged towards the direction of the retaining member 42, and the position of the booster body 431 corresponding to the second piston 435 is provided with a first via hole; the position of the mounting base 41 corresponding to the first via hole is provided with a second via hole 412, and the first via hole and the second via hole 412 are successively in communication with the second mounting hole 411; one end of the second piston rod 4351 of the second piston 435 successively penetrates the first via hole and the second via hole 412, and abuts against the retaining member 42; and the gas in the train pipe successively enters the air inlet 4311, the air passage 434, and the left chamber of the second accommodating cavity 433, hereby pushing the second piston 435 to retract and accordingly pushing the second piston rod 4351 away from the retaining member 42. In this way, the retaining member 42 can be restored to the initial state, so as to get rid of the constraint of the annular groove 331.

Following contents need to be clarified. Firstly, the second piston 435 further includes a second release spring 4352 sleeved on the outer circumference of the limiting tube 432, and one end of the second release spring 4352 is in connection with the second piston 435, while the other end is in connection with the step part of the limiting tube 432. In this way, the gas in the train pipe successively enters the air inlet 4311, the air passage 434, and the left chamber of the second accommodating cavity 433, the second release spring 4352 is compressed, and the second piston 435 retracts.

Secondly, since the retaining member 42 is mounted in the second mounting hole 411 of the mounting base 41, the booster assembly 43 is arranged to be perpendicular to the mounting base 41 for facilitating the completion of a fastening or unlocking action by pushing the retaining member 42 by the booster assembly 43. Of course, in other embodiments, they may also be arranged in parallel with each other, in this case, the second piston 435 can be configured as a bending structure, wherein the retaining member 42 can be pushed to contract radially through the bending portion of the bending structure. It should be understood that the term "parallel" or "perpendicular" here may also refer to an approximately parallel or perpendicular relationship, rather than strictly indicating a parallel or perpendicular relationship.

Thirdly, the third mounting hole 4312 is provided on the end of the booster body 431 away from the air inlet 4311. The end of the booster body 431 provided with the third mounting hole 4312 is further provided with a limiting tube 432, wherein the limiting tube 432 is sleeved at the orifice of the third mounting hole 4312, and the outer diameter of the tube body gradually increases outwards in the shape of step.

Fourthly, one end of the second piston 435 is arranged towards the direction of the retaining member 42, in order to facilitate that the second piston 435 pushes the retaining member 42 to fasten or gets separated from the retaining member 42 for unlocking; and the booster body 431 is further provided with a first via hole, the part of the mounting base 41 corresponding to the first via hole is provided with a second via hole 412, and the second accommodating cavity 433, the first via hole, the second via hole 412, and the second mounting hole 411 are successively in communication.

Fifthly, in order to facilitate processing, in the present embodiment, the mounting base 41 and the booster body 431 are configured as a whole. Of course, a person skilled in the art could also choose a manner of fixed connection.

Sixthly, in the present embodiment, in order to prevent dust, impurities or the like from entering the second accommodating cavity 433 and accordingly affecting the normal working of the second piston 435 assembly, a filter 44 may also be provided at the inlet or the outlet of the air passage 434.

The mounting base 41 is further provided with a fourth mounting hole 413, the second mounting hole 411 is in communication with the second via hole 412 through the fourth mounting hole 413, and the fourth mounting hole 413 is further provided therein with a lockup member 414 cooperating with the retaining member 42, wherein the second piston rod 4351 can push the lockup member 414, such that the retaining member 42 is fastened, or moves away from the lockup member 414, such that the retaining member 42 is released. In the present embodiment, the lockup member 414 is arranged in a U-shape; in this way, the second piston rod 4351 can make the retaining member 42 contract radially and be accordingly clamped in the annular groove 331 by pushing this lockup member 414.

Further, a tapered wedge 415 may further mounted in the second via hole 412, the side of the tapered wedge 415 away from the lockup member 414 is in threaded connection with the second piston rod 4351, the inclined plane of the tapered wedge 415 matches the inclined plane of the lockup member 414, and the tapered wedge 415 can be pushed by the second piston rod 4351 and the lockup member 414 is pushed accordingly by the tapered wedge 415 to move upwards and contract radially, such that the retaining member 42 is fastened and clamped in the annular groove 331. It should be understood that the inclined plane of the tapered wedge 415 should be able to push the lockup member 414 to move upwards. In the present embodiment, the inclined plane of the tapered wedge 415 is arranged to face up.

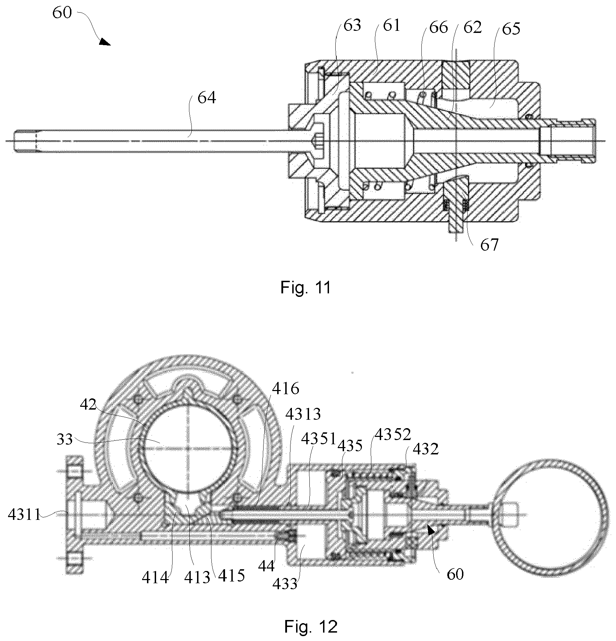

Referring further to Figs. 11 and 12, in the present embodiment, the vehicle brake parking device 100 further comprises a manual release mechanism 60 arranged in the second piston 435, wherein the end portion of the manual release mechanism 60 close to the retaining member 42 is in connection with the second piston 435, while the end portion away from the retaining member 42 penetrates the second piston 435 and extends out of the limiting tube 432, the manual release mechanism 60 is pulled in a direction away from the retaining member 42, and the manual release mechanism 60 drives the second piston 435 to retract, such that the retaining member 42 is separated from the annular groove 331.

Following contents need to be clarified. Firstly, there should be a cavity in the interior of the second piston 435, and the side of the second piston 435 away from the retaining member 42 should be provided with an opening, such that the manual release mechanism 60 is placed in the cavity and one end thereof extends out through the opening. In other embodiments, the manual release mechanism 60 may also be arranged in a third accommodating cavity 436 formed by the limiting tube 432 and the second piston 435, in this case, the end of the second piston 435 close to the retaining member 42 shall be provided with an open pore, and one end of the manual release mechanism 60 penetrates the open pore and is in connection with the second piston 435, while the other end extends to the outside of the limiting tube 432, so as to facilitate manual pulling of the manual release mechanism 60. As a result, the vehicle brake parking device 100 is in a compact structure and requires a smaller floor space.

In the present embodiment, the end portion of the manual release mechanism 60 close to the retaining member 42 extends from a first through hole of the second piston 435 to the outside of the second piston 435, the manual release mechanism 60 is pulled in a direction away from the retaining member 42, and the manual release mechanism 60 moves away from the retaining member 42, such that the retaining member 42 is separated from the annular groove 331; and gas is filled through the air inlet 4311, and the second piston 435 pushes the manual release mechanism 60 to retract, hereby making the manual release mechanism 60 relieve the keeping of the released state.

It shall be clarified that when the end portion of the manual release mechanism 60 close to the retaining member 42 extends to the outside of the second piston 435, since the end portion of the manual release mechanism 60 close to the retaining member 42 is simultaneously arranged within the second piston rod 4351, and since the release screw 64 of the manual release mechanism 60 is in threaded connection with the tapered wedge 415, the release screw 64 can drive the tapered wedge 415 to move towards the right in case that the manual release mechanism 60 is pulled, at this moment, the tapered wedge 415 can transmit the force to a reset sleeve which is sleeved on the end of the release screw 64 close to the retaining member 42, and then the reset sleeve can transmit the force successively to the second piston rod 4351 and the second piston 435, and the second piston 435 then compresses the second release spring 4352; in this way, the manual release mechanism 60 and the second piston 435 can mutually be driven to move, and the release can be achieved only by moving the manual release mechanism 60 away from the retaining member.

For example, when the manual release mechanism 60 is pulled in a direction away from the retaining member 42, the manual release mechanism 60 drives the second piston 435 to retract, and the end portion of the manual release mechanism 60 close to the retaining member 42 moves away from the retaining member 42, such that the retaining member 42 is restored to the initial state, and the annular groove 331 on the outer circle of the first piston rod 33 gets rid of the constraint of the retaining member 42, hereby releasing the brake cylinder; and when gas is filled through the gas inlet 4311, the air pressure pushes the second piston 435 to retract, at this moment, the second piston 435 drives the manual release mechanism 60 to retract, and the manual release mechanism 60 moves away from the retaining member 42, such that the retaining member 42 is restored to the initial state, and the annular groove 331 on the outer circle of the first piston rod 33 gets rid of the constraint of the retaining member 42, hereby releasing the brake cylinder.

Further, the manual release mechanism 60 includes a release mechanism body 61 arranged in the third accommodating cavity 436, a taper shank 62, a spherical washer 63 connected on the side of the release mechanism body 61 close to the second piston 435, and a release screw 64 passing through the first through hole and hinged to the spherical washer 63, wherein the release mechanism body 61 and the spherical washer 63 form a fourth accommodating cavity 65, the side of the release mechanism body 61 away from the spherical washer 63 is provided with a third via hole which is in communication with the fourth accommodating cavity 65, a third release spring 66 is sleeved on the outer circumference of the taper shank 62, the taper shank 62 is arranged in the fourth accommodating cavity 65 and extends through the third via hole to the outside of the release mechanism body 61, and the release mechanism body 61 is provided with a stepped fourth via hole, which is in communication with the fourth accommodating cavity 65 and in which a limiting bayonet 67 capable of extending to the outside of the release mechanism body 61 under the action of the taper shank 62 is mounted.

Following contents need to be clarified. Firstly, the manual release mechanism 60 includes a release mechanism body 61, a taper shank 62, a spherical washer 63, and a release screw 64, wherein the release screw 64 is arranged in the first through hole of the second piston rod 4351, the release mechanism body 61 is arranged in the third accommodating cavity 436, the spherical washer 63 is arranged in the release mechanism body 61, and the taper shank 62 extends from the third via hole of the release mechanism body 61 to the outside of the release mechanism body 61. Furthermore, it shall be noted that the internal wall of the release mechanism body 61 is further provided with a protrusion, such that the third release spring 66 sleeved on the taper shank 62 can abut against this protrusion and be kept here.

Secondly, the release mechanism body 61 is provided with a stepped fourth via hole, which is in communication with the fourth accommodating cavity 65 and in which a limiting bayonet 67 capable of extending to the outside of the release mechanism body 61 under the action of the taper shank 62 is mounted. A bayonet spring is further arranged between the limiting bayonet 67 and the fourth via hole, and is sleeved on the limiting bayonet 67, such that the limiting bayonet 67 has a tendency to retract radially.

Thirdly, the release screw 64 has a length greater than that of the second piston rod 4351. When the end of the manual release mechanism 60 close to the retaining member 42 extends from the first through hole of the second piston 435 to the outside of the second piston 435, the release screw 64 is used to drive the retaining member 42 to perform a fastening action; of course, in other embodiments, the second piston rod 4351 may also be used to drive the retaining member 42 to perform a fastening action. Of course, when a reset sleeve 45 is sleeved on the release screw 64, the force can be transmitted through the reset sleeve 45.

In the present embodiment, the taper shank 62 and the limiting bayonet 67 respectively have an inclined plane, and the inclined plane of the taper shank 62 matches the inclined plane of the limiting bayonet 67. The extension or retraction of the limiting bayonet 67 under the action of the taper shank 62 can be achieved thereby.

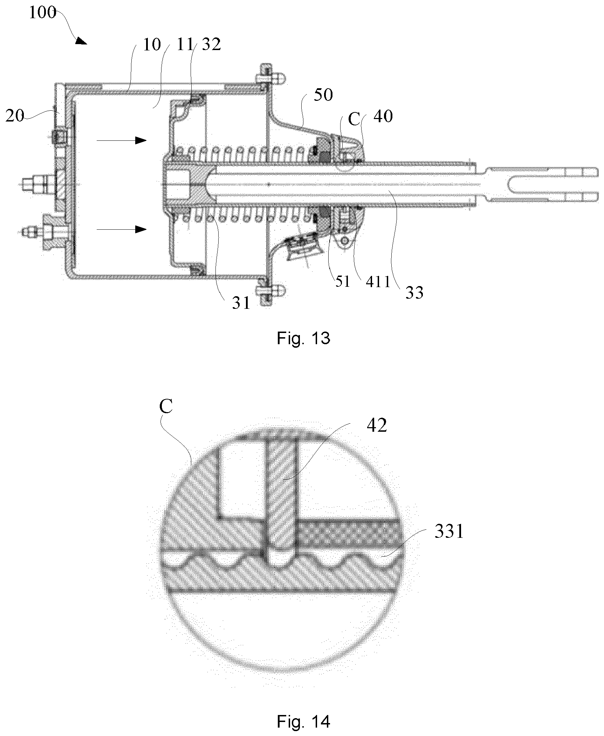

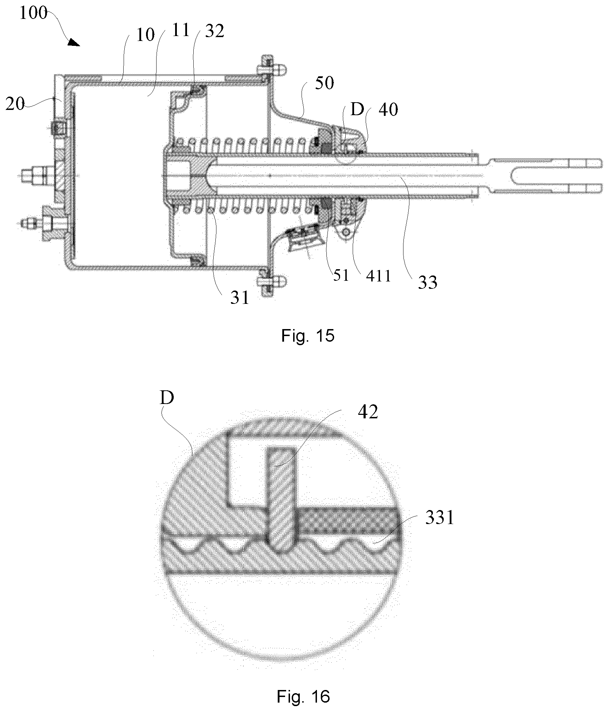

Referring further to Figs. 13 to 16, the working principles of the vehicle brake parking device 100 provided in the present embodiment respectively in an inflation unlocked (released) state, in a deflation locked (parking) state, and in a manually unlocked (released) state are as follows.

Inflation unlocked (released) state: During the travel of a train, pressurized air of the train pipe enters through the air inlet 4311, and is charged into the side of the second accommodating cavity 433 close to the filter 44 after passing through the filter 44, and the second piston 435 retracts towards the right, such that the second piston rod 4351 of the second piston 435 moves towards the right, as a result, the second piston rod 4351 (or the release screw 64) drives the tapered wedge 415 to retract towards the right, the lockup member 414 then radially moves downwards, such that the retaining member 42 is unlocked, the parking mechanism 40 is in an unlocked state, and the brake cylinder is in an unlocked (released) state.

Deflation locked (parking) state: When the air pressure in the train pipe is reduced to a certain pressure value, the second piston 435 moves towards the left under the action of the second release spring 4352, and the second piston 435 drives the manual release mechanism 60 to move towards the left, such that the second piston rod 4351 of the second piston 435 pushes the tapered wedge 415 to move towards the left, the lockup member 414 radially moves upwards, hereby pushing the retaining member 42 to contract radially, and the retaining member 42 is clamped in the annular groove 331 of the first piston rod 33, in this way, the first piston rod 33 is limited and cannot retract. Even if the air pressure in the left side of the brake cylinder completely leaks out, the first piston rod 33 can still be maintained in the braking position.

Manually unlocked (released) state: When no air pressure is charged into the left side of the second accommodating cavity 433, but unlocking is necessary, the manual release mechanism 60 can be pulled towards the right and moved towards a direction away from the retaining member 42, the manual release mechanism 60 drives the tapered wedge 415 to move towards the right, the lockup member 414 radially moves downwards under the action of the retaining member 42, the retaining member 42 is restored to the initial state and relieves the lockup of the annular groove 331 on the outer circle of the first piston rod 33, and the parking mechanism 40 is in the unlocked state, the first piston rod 33 is then no longer limited by the retaining member 42, such that the first piston rod 33 retracts, and the brake cylinder is in the unlocked (released) state. At this moment, the limiting bayonet 67 extends out of the limiting tube 432 under the action of the conical surface of the taper shank 62, and is clamped on the step of a limiting sleeve when releasing the taper shank and cannot retract into the release mechanism body 61; in this case, the second piston 435 is locked up, hereby making the parking mechanism keep the released state.

The above mentioned is merely optional embodiments of the present invention, and is not intended to limit the present invention, and for a person skilled in the art, the present invention may be modified and changed in various ways within the scope of the appended claims.

### Industrial Applicability

In the vehicle brake parking device provided in the embodiments of the present invention, the opening and closing of the brake parking can be controlled. When the vehicle is braked, the retaining member is clamped in the annular groove, in this way, the first piston rod can be fixed, which means that the first piston rod cannot retract, and even if air in the brake cylinder completely leaks out, the first piston rod can still be kept in the braking position under the action of the retaining member, hereby realizing the parking brake, with the magnitude of the parking braking force depending on the acting force of the occurrence of the braking action. When the release is necessary, the retaining member is unlocked, and the brake parking action is relieved. The vehicle brake parking device can realize the automation of vehicle parking after a braking action occurs, and relieve the dependence of the vehicle brake parking on the operator.

## Claims

1. A vehicle brake parking device (100), comprising: a cylinder block (10), a cylinder base (20), a first piston assembly, a first release spring (31), a parking mechanism (40), and a cylinder head (50), wherein the cylinder block (10) is arranged on the cylinder base (20), the cylinder head (50) covers a side of the cylinder block (10) away from the cylinder base (20), the cylinder block (10) and the cylinder head (50) form a first accommodating cavity (11), a first mounting hole (51) is formed at a center of the cylinder head (50), the parking mechanism (40) comprises a mounting base (41), a retaining member (42), and a booster assembly (43), wherein the mounting base (41) is arranged on an end face of the cylinder head (50) away from the cylinder block (10), a second mounting hole (411) is formed at a position of the mounting base (41) corresponding to the first mounting hole (51), and the retaining member (42) is arranged in the second mounting hole (411), the first piston assembly comprises a first piston (32) slidably connected in the first accommodating cavity (11), and a first piston rod (33) which is in fixed connection with the first piston (32), wherein the first piston rod (33) extends to an outside of the parking mechanism (40) after successively penetrating the first mounting hole (51) and the second mounting hole (411), the first release spring (31) is sleeved on an outer circumference of the first piston rod (33), and has one end in connection with the first piston (32), and the other end in connection with the cylinder head (50); the outer circumference of the first piston rod (33) is provided with an annular groove (331), which is configured for clamping the retaining member (42), the booster assembly (43) is in connection with the mounting base (41), and is configured for pushing the retaining member (42) out of the annular groove (331) under an action of a gas pressure of a train pipe, such that the parking mechanism (40) is in a released state,
wherein the booster assembly (43) is arranged to be perpendicular to the mounting base (41), the booster assembly (43) comprises a booster body (431), and an air inlet (4311) and a third mounting hole (4312) that are respectively provided on two opposite ends of the booster body (431), and an end of the booster body (431) provided with the third mounting hole (4312) is further provided with a limiting tube (432), wherein the limiting tube (432) is mounted at an orifice of the third mounting hole (4312), an outer diameter of a tube body gradually increases outwards in a shape of a step, a second accommodating cavity (433) is formed by the third mounting hole (4312) and the limiting tube (432), and the air inlet (4311) is in communication with the second accommodating cavity (433) through an air passage (434); and
the second accommodating cavity (433) is provided therein with a second piston (435), one end of the second piston (435) faces a direction of the retaining member (42), and the booster body (431) is provided with a first via hole (4313) in correspondence with the second piston (435), a position of the mounting base (41) corresponding to the first via hole (4313) is provided with a second via hole (412), and the second accommodating cavity (433), the first via hole (4313), and the second via hole (412) are successively in communication with the second mounting hole (411), one end of a second piston rod (4351) of the second piston (435) successively penetrates the first via hole (4313) and the second via hole (412), and abuts against the retaining member (42), gas in the train pipe successively enters the air inlet (4311), the air passage (434), and the second accommodating cavity (433), hereby pushing the second piston (435) to retract and pushing the second piston rod (4351) away from the retaining member (42),
**characterized in that** the air passage (434) is further provided therein with a filter (44).

2. The vehicle brake parking device (100) according to claim 1, wherein an end of the first piston rod (33) away from the first piston (32) is in connection with a push rod, wherein the push rod pushes a basic braking device to produce a braking force.

3. The vehicle brake parking device (100) according to claim 1 or 2, wherein when a pressure of the train pipe is reduced to a certain pressure value after that a vehicle is braked, the booster assembly (43) moves towards a direction of the retaining member (42), hereby pushing the retaining member (42) to fasten so as to be clamped in the annular groove (331); and when a braking needs to be released, the train pipe is filled with pressurized air, so as to push the booster assembly (43) to move, at this moment, the booster assembly (43) moves in a direction away from the retaining member (42), such that the retaining member (42) is unlocked, the annular groove (331) on the first piston rod (33) accordingly gets rid of a constraint of the retaining member (42), and the first piston rod (33) returns to an initial position under an action of the first release spring (31), hereby relieving a parking brake action.

4. The vehicle brake parking device (100) according to any one of the preceding claims, wherein the outer circumference of the first piston (32) is provided with an annular slot (321), wherein the annular slot (321) is provided therein with a sealing ring (322), and the sealing ring (322) is locked in the annular slot (321) through a leather cup locking ring (323).

5. The vehicle brake parking device (100) according to any one of the preceding claims, wherein the first piston assembly further comprises a locking ring stopper (324) extending from the outer circumference of the first piston (32) outwards, wherein the locking ring stopper (324) is configured to stop the leather cup locking ring (323) from being separated from the annular slot (321).

6. The vehicle brake parking device (100) according to any one of the preceding claims, wherein the retaining member (42) is sleeved on the first piston rod (33), and an outer circumference of the retaining member (42) is embedded in the second mounting hole (411).

7. The vehicle brake parking device (100) according to any one of the preceding claims, wherein the retaining member (42) is an open-ended ring having a clamping portion (421) and a limiting portion (422), wherein the clamping portion (421) and the limiting portion (422) are arranged opposite to each other, a clamping arc (423) of the clamping portion (421) is able to be clamped in the annular groove (331), and the limiting portion (422) is clamped in the mounting base (41) in a position-limiting manner.

8. The vehicle brake parking device (100) according to claim 1, further comprising a manual release mechanism (60) arranged in the second piston (435), wherein an end portion of the manual release mechanism (60) close to the retaining member (42) is in connection with the second piston (435), and an end portion away from the retaining member (42) penetrates the second piston (435) and extends out of the limiting tube (432), the manual release mechanism (60) is pulled in a direction away from the retaining member (42), and the manual release mechanism (60) drives the second piston (435) to retract, such that the retaining member (42) is separated from the annular groove (331).

9. The vehicle brake parking device (100) according to claim 1 or 8, wherein the end portion of the manual release mechanism (60) close to the retaining member (42) extends from a first through hole of the second piston (435) to an outside of the second piston (435), the manual release mechanism (60) is pulled in the direction away from the retaining member (42), and the manual release mechanism (60) moves away from the retaining member (42), such that the retaining member (42) is separated from the annular groove (331); and gas is filled through the air inlet (4311), and the second piston (435) pushes the manual release mechanism (60) to retract, hereby making the manual release mechanism (60) away from the retaining member (42).

10. The vehicle brake parking device (100) according to any one of claims 1-9, wherein the mounting base (41) is further provided with a fourth mounting hole (413), the second mounting hole (411) is in communication with the second via hole (412) through the fourth mounting hole (413), and the fourth mounting hole (413) is further provided therein with a lockup member (414) cooperating with the retaining member (42), wherein the second piston rod (4351) pushes the lockup member (414), such that the retaining member (42) is fastened, or moves away from the lockup member (414), such that the retaining member (42) is released.

11. The vehicle brake parking device (100) according to claim 10, wherein the lockup member (414) is formed in a U-shape.

12. The vehicle brake parking device (100) according to claim 10 or 11, wherein a tapered wedge (415) is further mounted in the second via hole (412), a side of the tapered wedge (415) away from the lockup member (414) is in threaded connection with the second piston rod (4351), an inclined plane of the tapered wedge (415) matches an inclined plane of the lockup member (414), and the tapered wedge (415) is pushed by the second piston rod (4351) and the lockup member (414) is pushed accordingly by the tapered wedge (415), to move upwards and contract in a radial direction, such that the retaining member (42) is clamped in the annular groove (331) in a fastened manner.

13. The vehicle brake parking device (100) according to any one of claims 8-12, wherein the manual release mechanism (60) is arranged in a third accommodating cavity (436) formed by the limiting tube (432) and the second piston (435), an end of the second piston (435) close to the retaining member (42) is provided with an open pore, and the manual release mechanism (60) has one end penetrating the open pore and is in connection with the second piston (435), and the other end extending to an outside of the limiting tube (432).

## Patentansprüche

1. Feststellbremsvorrichtung für Fahrzeuge (100), welche umfasst: einen Zylinderblock (10), einen Zylinderfuß (20), eine erste Kolbenanordnung, eine erste Auslösefeder (31), einen Parkmechanismus (40) und einen Zylinderkopf (50), wobei der Zylinderblock (10) auf dem Zylinderfuß (20) angeordnet ist, der Zylinderkopf (50) eine vom Zylinderfuß (20) entfernte Seite des Zylinderblocks (10) bedeckt, der Zylinderblock (10) und der Zylinderkopf (50) einen ersten Aufnahmehohlraum (11) bilden, ein erstes Befestigungsloch (51) an einem Mittelpunkt des Zylinderkopfes (50) ausgebildet ist, der Parkmechanismus (40) einen Befestigungsfuß (41), ein Halteelement (42) und eine Verstärkeranordnung (43) umfasst, wobei der Befestigungsfuß (41) an einer Endfläche des Zylinderkopfes (50) angeordnet ist, die vom Zylinderkopf (10) entfernt ist, ein zweites Befestigungsloch (411) an einer Position des Befestigungsfußes (41) ausgebildet ist, die dem ersten Befestigungsloch (51) entspricht, und das Halteelement (42) in dem zweiten Befestigungsloch (411) angeordnet ist, die erste Kolbenanordnung einen ersten Kolben (32), der im ersten Aufnahmehohlraum (11) verschiebbar gekoppelt ist, und eine erste Kolbenstange (33), welche mit dem ersten Kolben (32) in fester Verbindung steht, umfasst, wobei sich die erste Kolbenstange (33) zu einer Außenseite des Parkmechanismus (40) erstreckt, nachdem sie nacheinander das erste Befestigungsloch (51) und das zweite Befestigungsloch (411) durchdringt, die erste Auslösefeder (31) auf einen Außenumfang der ersten Kolbenstange (33) aufgeschoben ist und ein Ende aufweist, das mit dem ersten Kolben (32) in Verbindung steht, während das andere Ende mit dem Zylinderkopf (50) in Verbindung steht; wobei der Außenumfang der ersten Kolbenstange (33) mit einer Ringnut (331) versehen ist, welche dafür ausgelegt ist, das Halteelement (42) festzuklemmen, die Verstärkeranordnung (43) mit dem Befestigungsfuß (41) in Verbindung steht und dafür ausgelegt ist, das Halteelement (42) unter einer Wirkung eines Gasdrucks einer Bremsleitung aus der Ringnut (331) hinauszudrücken, so dass sich der Parkmechanismus (40) in einem gelösten Zustand befindet,
wobei die Verstärkeranordnung (43) so angeordnet ist, dass sie senkrecht zum Befestigungsfuß (41) ist, die Verstärkeranordnung (43) einen Verstärkerkörper (431) und einen Lufteinlass (4311) und ein drittes Befestigungsloch (4312), welche jeweils an einem von zwei gegenüberliegenden Enden des Verstärkerkörpers (431) vorgesehen sind, umfasst, und ein Ende des Verstärkerkörpers (431), das mit dem dritten Befestigungsloch (4312) versehen ist, ferner mit einem Begrenzungsrohr (432) versehen ist, wobei das Begrenzungsrohr (432) an einer Öffnung des dritten Befestigungsloches (4312) angebracht ist, ein Außendurchmesser eines Rohrkörpers sich nach außen hin in einer Form einer Stufe allmählich vergrößert, ein zweiter Aufnahmehohlraum (433) von dem dritten Befestigungsloch (4312) und dem Begrenzungsrohr (432) gebildet wird und der Lufteinlass (4311) mit dem zweiten Aufnahmehohlraum (433) durch einen Luftdurchlass (434) in Verbindung steht; und
der zweite Aufnahmehohlraum (433) mit einem zweiten Kolben (435) in ihm versehen ist, ein Ende des zweiten Kolbens (435) einer Richtung des Halteelements (42) zugewandt ist und der Verstärkerkörper (431) mit einem ersten Durchgangsloch (4313) versehen ist, das in Übereinstimmung mit dem zweiten Kolben (435) angeordnet ist, eine dem ersten Durchgangsloch (4313) entsprechende Position des Befestigungsfußes (41) mit einem zweiten Durchgangsloch (412) versehen ist und der zweite Aufnahmehohlraum (433), das erste Durchgangsloch (4313) und das zweite Durchgangsloch (412) nacheinander mit dem zweiten Befestigungsloch (411) in Verbindung stehen, ein Ende einer zweiten Kolbenstange (4351) des zweiten Kolbens (435) nacheinander das erste Durchgangsloch (4313) und das zweite Durchgangsloch (412) durchdringt und an das Halteelement (42) stößt, Gas in der Bremsleitung nacheinander in den Lufteinlass (4311), den Luftdurchlass (434) und den zweiten Aufnahmehohlraum (433) eintritt und dabei gegen den zweiten Kolben (435) drückt, so dass er zurückfährt, und die zweite Kolbenstange (4351) von dem Halteelement (42) wegdrückt,
**dadurch gekennzeichnet, dass** der Luftdurchlass (434) ferner mit einem Filter (44) darin versehen ist.

2. Feststellbremsvorrichtung für Fahrzeuge (100) nach Anspruch 1, wobei ein Ende der ersten Kolbenstange (33), das vom Kolben (32) entfernt ist, mit einer Schubstange in Verbindung steht, wobei die Schubstange eine Basis-Bremsvorrichtung schiebt, um eine Bremskraft zu erzeugen.

3. Feststellbremsvorrichtung für Fahrzeuge (100) nach Anspruch 1 oder 2, wobei, wenn ein Druck der Bremsleitung auf einen bestimmten Druckwert verringert wird, nachdem ein Fahrzeug gebremst worden ist, die Verstärkeranordnung (43) sich in einer Richtung des Halteelements (42) bewegt und hierdurch das Halteelement (42) zum Befestigen schiebt, so dass es in der Ringnut (331) festgeklemmt wird; und wenn eine Bremsung gelöst werden soll, die Bremsleitung mit Druckluft gefüllt wird, um gegen die Verstärkeranordnung (43) zu drücken, um sie zu bewegen; in diesem Moment bewegt sich die Verstärkeranordnung (43) in einer Richtung weg von dem Halteelement (42), so dass das Halteelement (42) entarretiert wird, die Ringnut (331) auf der ersten Kolbenstange (33) dementsprechend nicht mehr einer Einschränkung durch das Halteelement (42) unterliegt und die erste Kolbenstange (33) unter einer Wirkung der ersten Auslösefeder (31) in eine Ausgangsposition zurückkehrt, wodurch eine Feststellbremswirkung gelöst wird.

4. Feststellbremsvorrichtung für Fahrzeuge (100) nach einem der vorhergehenden Ansprüche, wobei der Außenumfang des ersten Kolbens (32) mit einem Ringspalt (321) versehen ist, wobei der Ringspalt (321) mit einem darin befindlichen Dichtring (322) versehen ist und der Dichtring (322) in dem Ringspalt (321) durch einen Ledermanschetten-Verschlussring (323) arretiert ist.

5. Feststellbremsvorrichtung für Fahrzeuge (100) nach einem der vorhergehenden Ansprüche, wobei die erste Kolbenanordnung ferner einen Verschlussring-Stopper (324) umfasst, der sich vom Außenumfang des ersten Kolbens (32) aus nach außen erstreckt, wobei der Verschlussring-Stopper (324) dafür ausgelegt ist zu verhindern, dass der Ledermanschetten-Verschlussring (323) von dem Ringspalt (321) getrennt wird.

6. Feststellbremsvorrichtung für Fahrzeuge (100) nach einem der vorhergehenden Ansprüche, wobei das Halteelement (42) auf die erste Kolbenstange (33) aufgeschoben ist und ein Außenumfang des Halteelements (42) in das zweite Befestigungsloch (411) eingebettet ist.

7. Feststellbremsvorrichtung für Fahrzeuge (100) nach einem der vorhergehenden Ansprüche, wobei das Halteelement (42) ein unterbrochener Ring ist, der einen Klemmabschnitt (421) und einen Begrenzungsabschnitt (422) aufweist, wobei der Klemmabschnitt (421) und der Begrenzungsabschnitt (422) einander gegenüberliegend angeordnet sind, wobei ein Klemmbogen (423) des Klemmabschnitts (421) in der Ringnut (331) festklemmbar ist und der Begrenzungsabschnitt (422) in dem Befestigungsfuß (41) auf eine positionsbegrenzende Weise festgeklemmt ist.

8. Feststellbremsvorrichtung für Fahrzeuge (100) nach Anspruch 1, welche ferner einen manuellen Lösemechanismus (60) umfasst, der im zweiten Kolben (435) angeordnet ist, wobei ein dem Halteelement (42) naher Endabschnitt des manuellen Lösemechanismus (60) mit dem zweiten Kolben (435) in Verbindung steht und ein von dem Halteelement (42) entfernter Endabschnitt den zweiten Kolben (435) durchdringt und sich aus dem Begrenzungsrohr (432) hinaus erstreckt, der manuelle Lösemechanismus (60) in eine Richtung vom Halteelement (42) weg gezogen wird und der manuelle Lösemechanismus (60) den zweiten Kolben (435) treibt, so dass er zurückfährt, so dass das Halteelement (42) von der Ringnut (331) getrennt wird.

9. Feststellbremsvorrichtung für Fahrzeuge (100) nach Anspruch 1 oder 8, wobei sich der dem Halteelement (42) nahe Endabschnitt des manuellen Lösemechanismus (60) von einem ersten Durchgangsloch des zweiten Kolbens (435) zu einer Außenseite des zweiten Kolbens (435) erstreckt, der manuelle Lösemechanismus (60) in die Richtung vom Halteelement (42) weg gezogen wird und der manuelle Lösemechanismus (60) sich vom Halteelement (42) weg bewegt, so dass das Halteelement (42) von der Ringnut (331) getrennt wird; und Gas durch den Lufteinlass (4311) eingefüllt wird und der zweite Kolben (435) gegen den manuellen Lösemechanismus (60) drückt, so dass er zurückfährt, wodurch bewirkt wird, dass sich der manuelle Lösemechanismus (60) vom Halteelement (42) entfernt.

10. Feststellbremsvorrichtung für Fahrzeuge (100) nach einem der Ansprüche 1 - 9, wobei der Befestigungsfuß (41) ferner mit einem vierten Befestigungsloch (413) versehen ist, das zweite Befestigungsloch (411) mit dem zweiten Durchgangsloch (412) durch das vierte Befestigungsloch (413) in Verbindung steht und das vierte Befestigungsloch (413) ferner mit einem Sperrelement (414) versehen ist, das mit dem Halteelement (42) zusammenwirkt, wobei die zweite Kolbenstange (4351) das Sperrelement (414) schiebt, so dass das Halteelement (42) befestigt wird, oder sich von dem Sperrelement (414) wegbewegt, so dass das Halteelement (42) gelöst wird.

11. Feststellbremsvorrichtung für Fahrzeuge (100) nach Anspruch 10, wobei das Sperrelement (414) in einer U-Form ausgebildet ist.

12. Feststellbremsvorrichtung für Fahrzeuge (100) nach Anspruch 10 oder 11, wobei ferner ein spitz zulaufender Keil (415) in dem zweiten Durchgangsloch (412) angebracht ist, eine von dem Sperrelement (414) entfernte Seite des spitz zulaufenden Keils (415) mit der zweiten Kolbenstange (4351) in Schraubverbindung steht, eine geneigte Ebene des spitz zulaufenden Keils (415) mit einer geneigten Ebene des Sperrelements (414) übereinstimmt und der spitz zulaufende Keil (415) von der zweiten Kolbenstange (4351) geschoben wird und das Sperrelement (414) dementsprechend von dem spitz zulaufenden Keil (415) geschoben wird, um sich nach oben zu bewegen und in einer radialen Richtung zusammenzuziehen, so dass das Halteelement (42) in der Ringnut (331) festgeklemmt wird.

13. Feststellbremsvorrichtung für Fahrzeuge (100) nach einem der Ansprüche 8 - 12, wobei der manuelle Lösemechanismus (60) in einem dritten Aufnahmehohlraum (436) angeordnet ist, der von dem Begrenzungsrohr (432) und dem zweiten Kolben (435) gebildet wird, ein dem Halteelement (42) nahes Ende des zweiten Kolbens (435) mit einer offenen Pore versehen ist und der manuelle Lösemechanismus (60) ein Ende aufweist, das die offene Pore durchdringt und mit dem zweiten Kolben (435) in Verbindung steht, während sich das andere Ende zu einer Außenseite des Begrenzungsrohres (432) erstreckt.

## Revendications

1. Dispositif de frein de stationnement de véhicule (100), comprenant: un bloc-cylindres (10), une base de cylindre (20), un premier ensemble de piston, un premier ressort de déclenchement (31), un mécanisme de stationnement (40) et une culasse (50), dans lequel le bloc-cylindres (10) est disposé sur la base de cylindre (20), la culasse (50) couvre un côté du bloc-cylindres (10) se détournant de la base de cylindre (20), le bloc-cylindres (10) et la culasse (50) forment une première cavité de logement (11), un premier trou de montage (51) est formé au centre de la culasse (50), le mécanisme de stationnement (40) comprend une base de montage (41), un élément de retenue (42) et un ensemble amplificateur (43), dans lequel la base de montage (41) est disposée sur une face d'extrémité de la culasse (50) se détournant du bloc-cylindres (10), un deuxième trou de montage (411) est formé à une position de la base de montage (41) correspondant au premier trou de montage (51), et l'élément de retenue (42) est disposé dans le deuxième trou de montage (411), le premier ensemble de piston comprend un premier piston (32) raccordé de manière coulissante dans la première cavité de logement (11), et une première tige de piston (33) qui est en raccord fixe avec le premier piston (32), dans lequel la première tige de piston (33) s'étend vers un extérieur du mécanisme de stationnement (40) après avoir successivement pénétré le premier trou de montage (51) et le deuxième trou de montage (411), le premier ressort de déclenchement (31) est emmanché sur une circonférence extérieure de la première tige de piston (33), et a une extrémité en liaison avec le premier piston (32), et l'autre extrémité en liaison avec la culasse (50) ; la circonférence externe de la première tige de piston (33) est pourvue d'une rainure annulaire (331), qui est configurée pour serrer l'élément de retenue (42), l'ensemble amplificateur (43) est en relation avec la base de montage (41), et est configuré pour pousser l'élément de retenue (42) hors de la rainure annulaire (331) sous une action d'une pression de gaz d'un tuyau de train, de sorte que le mécanisme de stationnement (40) soit dans un état déclenché,
dans lequel l'ensemble amplificateur (43) est disposé pour être perpendiculaire à la base de montage (41), l'ensemble amplificateur (43) comprend un corps amplificateur (431) et une entrée d'air (4311) et un troisième trou de montage (4312) qui sont respectivement prévus à deux extrémités opposées du corps amplificateur (431), et une extrémité du corps amplificateur (431) pourvue du troisième trou de montage (4312) est en outre pourvue d'un tube de limitation (432), dans lequel le tube de limitation (432) est monté à un orifice du troisième trou de montage (4312), un diamètre extérieur d'un corps de tube augmente progressivement vers l'extérieur en forme de pas, une deuxième cavité de logement (433) se forme par le troisième trou de montage (4312) et le tube de limitation (432), et l'entrée d'air (4311) est en communication avec la deuxième cavité de logement (433) par un passage d'air (434); et
la deuxième cavité de logement (433) y est pourvue d'un deuxième piston (435), une extrémité du deuxième piston (435) fait face à une direction de l'élément de retenue (42), et le corps amplificateur (431) est pourvu d'un premier trou traversant (4313) en correspondance avec le deuxième piston (435), une position de la base de montage (41) correspondant au premier trou traversant (4313) est pourvue d'un deuxième trou traversant (412), et la deuxième cavité de logement (433), le premier trou traversant (4313), et le deuxième trou traversant (412) sont successivement en communication avec le deuxième trou de montage (411), une extrémité d'une deuxième tige de piston (4351) du deuxième piston (435) pénètre successivement la première trou traversant (4313) et le deuxième trou traversant (412), et bute contre l'élément de retenue (42), le gaz dans le tuyau de train pénètre successivement dans l'entrée d'air (4311), le passage d'air (434), et la deuxième cavité de logement (433), en poussant ainsi le deuxième piston (435) à se rétracter et en poussant la deuxième tige de piston (4351) à se détourner de l'élément de retenue (42),
**caractérisé en ce que** le passage d'air (434) y est pourvu d'un filtre (44).

2. Dispositif de frein de stationnement de véhicule (100) selon la revendication 1, dans lequel une extrémité de la première tige de piston (33) se détournant du premier piston (32) est en relation avec une tige de poussée, dans lequel la tige de poussée pousse un dispositif de freinage de base pour produire une force de freinage.

3. Dispositif de frein de stationnement de véhicule (100) selon la revendication 1 ou 2, dans lequel lorsqu'une pression du tuyau de train est réduite à une certaine valeur de pression après qu'un véhicule est freiné, l'ensemble amplificateur (43) se déplace vers une direction de l'élément de retenue (42), en poussant ainsi l'élément de retenue (42) à se fixer de manière à être serré dans la rainure annulaire (331) et lorsqu'un freinage doit être déclenché, le tuyau de train est rempli d'air sous pression, de manière à pousser l'ensemble amplificateur (43) à se déplacer, à ce moment, l'ensemble amplificateur (43) se déplace dans une direction se détournant de l'élément de retenue (42), de sorte que l'élément de retenue (42) soit déverrouillé, la rainure annulaire (331) sur la première tige de piston (33) se débarrasse en conséquence d'une contrainte de l'élément de retenue (42), et la première tige de piston (33) revient à une position initiale sous une action du premier ressort de déclenchement (31), en soulageant ainsi une action de frein de stationnement.

4. Dispositif de frein de stationnement de véhicule (100) selon une quelconque des revendications précédentes, dans lequel la circonférence extérieure du premier piston (32) est pourvue d'une fente annulaire (321), dans lequel la fente annulaire (321) est pourvue d'un anneau d'étanchéité (322), et l'anneau d'étanchéité (322) est verrouillé dans la fente annulaire (321) à travers une bague de verrouillage en cuir (323).

5. Dispositif de frein de stationnement de véhicule (100) selon une des revendications précédentes, dans lequel le premier ensemble de piston comprend en outre un bouchon d'bague de verrouillage (324) s'étendant de la circonférence extérieure du premier piston (32) vers l'extérieur, dans lequel le bouchon d'bague de verrouillage (324) est configuré pour empêcher la bague de verrouillage en cuir (323) d'être séparé de la fente annulaire (321).

6. Dispositif de frein de stationnement de véhicule (100) selon une des revendications précédentes, dans lequel l'élément de retenue (42) est emmanché sur la première tige de piston (33), et une circonférence extérieure de l'élément de retenue (42) est intégrée dans le deuxième trou de montage (411).

7. Dispositif de frein de stationnement de véhicule (100) selon une des revendications précédentes, dans lequel l'élément de retenue (42) est un anneau ouvert ayant une partie de serrage (421) et une partie de limitation (422), dans lequel la partie de serrage (421) et la partie de limitation (422) sont disposées en face les unes des autres, un arc de serrage (423) de la partie de serrage (421) peut être serré dans la rainure annulaire (331), et la partie de limitation (422) est serrée dans la base de montage (41) d'une manière limitant la position.

8. Dispositif de frein de stationnement de véhicule (100) selon la revendication 1, comprenant en outre un mécanisme de déclenchement manuel (60) organisé dans le deuxième piston (435), dans lequel une partie finale du mécanisme de déclenchement manuel (60) près de l'élément de retenue (42) est en liaison avec le deuxième piston (435), et une partie d'extrémité de l'élément de retenue (42) pénètre le deuxième piston (435) et s'étend hors du tube de limitation (432), le mécanisme de déclenchement manuel (60) est tiré dans une direction de l'élément de retenue (42), et le mécanisme de déclenchement manuel (60) entraîne le deuxième piston (435) à se rétracter, de sorte que l'élément de retenue (42) soit séparé de la rainure annulaire (331).

9. Dispositif de frein de stationnement de véhicule (100) selon la revendication 1 ou 8, dans lequel la partie finale du mécanisme de déclenchement manuel (60) près de l'élément de retenue (42) s'étend d'un premier trou traversant du deuxième piston (435) vers un extérieur du deuxième piston (435), le mécanisme de déclenchement manuel (60) est tiré dans la direction de l'élément de retenue (42), et le mécanisme de déclenchement manuel (60) s'éloigne de l'élément de retenue (42), de sorte que l'élément de retenue (42) soit séparé de la rainure annulaire (331); et le gaz est rempli à travers l'entrée d'air (4311), et le deuxième piston (435) pousse le mécanisme de déclenchement manuel (60) à se rétracter, en éloignant ainsi le mécanisme de déclenchement manuel (60) de l'élément de retenue (42).

10. Dispositif de frein stationnement de véhicule (100) selon une des revendications 1 à 9, dans lequel la base de montage (41) est en outre pourvue d'un quatrième trou de montage (413), le deuxième trou de montage (411) est en communication avec le deuxième trou traversant (412) à travers le quatrième trou de montage (413), et le quatrième trou de montage (413) y est en outre pourvu d'un élément de verrouillage (414) coopérant avec l'élément de retenue (42), dans lequel la deuxième tige de piston (4351) pousse l'élément de verrouillage (414), de sorte que l'élément de retenue (42) soit fixé ou s'éloigne de l'élément de verrouillage (414), de sorte que l'élément de retenue (42) est déclenché.

11. Dispositif de frein de stationnement de véhicule (100) selon la revendication 10, dans lequel l'élément de verrouillage (414) est façonné en forme de U.

12. Dispositif de frein de stationnement de véhicule (100) selon la réclamation 10 ou 11, dans lequel un coin conique (415) est en outre monté dans le deuxième trou traversant (412), un côté du coin conique (415) se détournant de l'élément de verrouillage (414) est en raccord fileté avec la deuxième tige de piston (4351), un plan incliné du coin conique (415) correspond à un plan incliné de l'élément de verrouillage (414), et le coin conique (415) est poussé par la deuxième tige de piston (4351) et l'élément de verrouillage (414) est poussé en conséquence par le coin conique (415), pour se déplacer vers le haut et se contracter dans une direction radiale, de sorte que l'élément de retenue (42) soit serré dans la rainure annulaire (331) de manière fixée.

13. Dispositif de frein de stationnement de véhicule (100) selon une des revendications 8 à 12, dans lequel le mécanisme de déclenchement manuel (60) est disposé dans une troisième cavité de logement (436) formée par le tube de limitation (432) et le deuxième piston (435), une extrémité du deuxième piston (435) près de l'élément de retenue (42) est dotée d'un pore ouvert, et le mécanisme de déclenchement manuel (60) a une extrémité pénétrant le pore ouvert et est en relation avec le deuxième piston (435), et l'autre extrémité s'étendant vers un extérieur du tube de limitation (432) .
